# EUROPÄISCHE PATENTSCHRIFT

(11) **EP 2 116 485 B1**
(45) Veröffentlichungstag und Bekanntmachung des Hinweises auf die Patenterteilung: **15.12.2010**
(21) Anmeldenummer: 08008526.9
(22) Anmeldetag: 06.05.2008
(51) Int. Cl.: B65D 88/02, B65D 88/06, B65D 88/08, B65D 90/02, B65D 88/76, B65D 90/10, B65D 90/00

(54) **Tank**
Tank
Réservoir

(43) Veröffentlichungstag der Anmeldung: 11.11.2009
(73) Patentinhaber: Graf Plastics GmbH, 79331 Teningen (DE)
(72) Erfinder: Graf, Otto P., Dipl.-Kfm., 79331 Teningen (DE)
(74) Vertreter: Grünecker, Kinkeldey, Stockmair & Schwanhäusser Anwaltssozietät

(56) Entgegenhaltungen:
- WO-A-2007/099371
- AU-A4- 2007 100 606
- DE-U1- 20 104 493
- US-A- 3 976 228
- US-B1- 6 227 396

## Beschreibung

Die Erfindung betrifft einen Tank gemäß Oberbegriff des Patentanspruchs 1.

Es ist ein Tank beispielsweise zur systematischen Regenwassernutzung zum Aufstellen auf dem Untergrund oder zum Erdeinbau seit längerem auf dem Markt, der ein Sollfassungsvermögen von rund 5.000 Liter aufweist und aus zwei Tankteilen mit jeweils einem theoretischen Fassungsvermögen von etwa 2.600 Liter besteht. Die Tankteile sind aus Kunststoff geblasen oder im Rotationsverfahren gefertigt und nachträglich nach einem Extruder-Schweißverfahren miteinander abgedichtet verbunden. Der Preisdruck für solche Tanks ist enorm, insbesondere bei Vertriebswegen über Baumarktketten, wobei der Preis durch den zusätzlichen Arbeitsschritt des Extruderschweißens und logistische Probleme ungünstig beeinflusst wird, da ein relativ großer und unförmiger Tank gehandhabt, gelagert, transportiert, und meist mit einem Hebezeug abgeladen werden muss. Da das Extruderschweißen zweier Tankteile nicht so schnell durchgeführt werden kann, wie die Fertigung der Tankteile, ist eine Zwischenlagerung der Tankteile vor dem Verschweißen erforderlich, was erhöhten Platzbedarf und weitere Logistikprobleme mit sich bringt. Es besteht deshalb Bedarf nach einem solchen Tank, der für den Endkunden deshalb kostengünstiger sein kann, weil er einfacher herstellbar, lagerbar, transportierbar und abladbar ist.

Aus US-A-3976228 ist ein Tank bekannt, der aus miteinander verblockten Kunststoff-Tankteilen erstellt wird. Die an sich ebenen Längswände jedes langgestreckt quaderförmigen Tankteils weisen zum Verblocken parallele, beabstandete, längliche pyramidenstumpfartige Wandbereichs-Strukturen auf, die senkrecht zur Tankteil-Längsachse (Z-Achse) orientiert sind. In zwei aneinander angrenzenden Längswänden sind die Strukturen erhaben; in den zwei weiteren Längswänden hingegen vertieft, dabei jeweils zueinander komplementär. Die Tankteile werden aufeinander gesetzt, bis die erhabenen Strukturen exakt in die vertieften Strukturen eingepasst sind. Die aufeinandergesetzten Tankteile werden dann über an den ebenen Stirnwänden installierte Rohrleitungssysteme kommunizierend miteinander verbunden.

Aus US 6 227 396 B1 ist ein Tanksystem bekannt, das aus identischen rotationsgeformten Kunststoff-Tankteilen erstellt wird. Jeder Tankteil ist kreiszylindrisch mit Umfangsrippen in der Zylinderwand, und weist an den Zylinderenden nach außen bombierte, gerade verrippte Kappen auf. An jeder Kappe ist mittig zwischen den Rippen ein Block mit einer ebenen Frontwand angeformt. Zwei benachbarte Tankteile werden mit den Frontwänden aneinander gesetzt, wobei in in den Frontwänden vorgeformte, aufeinander ausgerichtete Öffnungen Verbindungsrohrstücke eingesetzt sind. In der Zylinderwand des Tankteils ist ein Mannloch vorgesehen.

Aus DE-U-202 2007 005 007 sind Tankbatterien bekannt, die ein Sollfassungsvermögen dadurch ermöglichen, dass ein Haupttank mit mehreren Nebentanks, jeweils aus Kunststoff, kommunizierend verbunden ist, wobei zwischen dem Haupttank und jedem Nebentank die Installation der Verbindungen erleichternde Zwischenräume vorlieben. Die Haupt- und Nebentanks können baugleich oder identisch sein. Bei Erdeinbau ist zumindest in einem Dom des Haupttanks ein Domaufsatz installiert, der den Höhenabstand zum Bodenniveau überbrückt.

Aus US-B1-6 227 396 ist ein Erdeinbau-Speichertank zum modularen Aufbau eines Wasser-Speichersystems bekannt, dessen allgemein zylindrischer Körper Umfangsrippen und in bombierten Endkappen Querrippen aufweist. Das Fassungsvermögen des Tanks liegt bei etwa 7.570 Liter. Werden mehrere Tanks kombiniert, so sind im Erdreich Zwischenabstände zwischen den Tanks vorgesehen, in denen die Verbindungsrohre installiert sind. Bei einer Ausführungsform werden zwei Tanks mit ihren bombierten Endkappen bündig aneinandergesetzt und miteinander verspannt. Aufgrund des relativ großen Fassungsvermögens sind die Tanks schwierig zu transportieren und abzuladen.

Der Erfindung liegt die Aufgabe zugrunde, einen Tank der eingangs genannten Art anzugeben, der als Resultat wirtschaftlicher Fertigungs- und Logistiklösungen kostengünstig und bequem handhabbar ist, und dessen Tankteile sich in Einbaulage nicht relativ zueinander verlagerbar sind.

Die gestellte Aufgabe wird mit den Merkmalen des Patentanspruchs 1 gelöst.

Da jeder Tankteil zumindest eine Wandbereichs-Struktur aufweist, die sich paarweise mit der Wandbereichs-Struktur des benachbarten Tankteils verblocken lässt, können die Tankteile am Einsatzort miteinander ohne Zwischenraum verblockt zu werden, um den Tank mit dem gewünschten Sollfassungsvermögen zu erstellen. Das System ist prinzipiell endlos in Volumenstufen entsprechend dem Fassungsvermögen eines Tankteils erweiterbar, vorausgesetzt, jeder Tankteil hat zumindest zwei verblockbare Wandbereichs-Strukturen. Die Herstellung ist vereinfacht, weil ein Verschweißen der beiden Tankteile wegfällt. Die Handhabung ist beim Hersteller aufgrund der relativ kleinen und leichten Tankteile komfortabel. Der Transport ist logistisch verbessert, weil die Tankteile kompakt und leicht und mittels der Strukturen teilstapelbar sind. Das Abladen der Tankteile ist unproblematischer als das Abladen eines Tanks mit dem Sollfassungsvermögen. Der Endverbraucher oder Monteur braucht die beiden Tankteile nur miteinander zu verblocken und dann miteinander kommunizierend zu verbinden. Hierfür umfassen die ineinander verblockbaren Wandbereichs-Strukturen abwechselnd zueinander parallele Rippen und Nuten, wobei die Nuten zum formschlüssigen Aufnehmen der Rippen gestaltet sind, sowie wenigstens eine Nase und eine Nasenaufnahme, wobei die Nasenaufnahme die eingreifende Nase zumindest in Verlaufsrichtung der Rippen und Nuten im Wesentlichen, z.B. entlang der Y-Achse, blockiert. Durch diese Gestaltungsmaßnahme können sich die miteinander verblockten Tankteile in Einbaulage des Tankes in der Verblockungsebene nicht relativ zueinander verlagern. Im Tank aus den beiden ineinander verblockten Tankteilen sind die Wände aneinander gegen vom Innendruck abhängige Deformationen abgestützt. Die verblockbare Wandbereichs-Struktur lässt sich mit Herstellformen für Kunststoff so gestalten, dass, z.B. mit Wechseleinsätzen im Produktionswerkzeug, unterschiedliche Bauformen für Stehendeinbau oder Liegendeinbau erzeugbar sind. In Kombination ermöglichen die aus den Merkmalen resultierenden logistischen und herstellungstechnischen Vorteile günstige Abgabepreise bei gleichen Gebrauchseigenschaften wie ein einziger großer Tank oder mehrere mit Zwischenabständen isoliert installierte Einzeltanks.

Bei einer besonders zweckmäßigen Ausführungsform sind die Rippen und Nuten der Wandbereichs-Strukturen durch eine um eine am Einbauort horizontale oder vertikale Einbauachse gewindegangartig umlaufende Rippe und eine im Querschnitt an die Rippe angepasste gewindegangartige Nut gebildet. Obwohl die Tankteile identisch sein können, lassen sie sich dank der Gewindestruktur auf dem gleichen Höhenniveau miteinander verblocken. Dabei ist es zweckmäßig, wenn die Gewindesteigung derart gewählt ist, dass die Rippe in einer Wand zur Rippe in der gegenüberliegenden Wand auf Lücke verläuft.

Bei einer zweckmäßigen Ausführungsform sind in jeder Wand die Nase und die Nasenaufnahme zum Verblocken, vorzugsweise separiert von den Rippen und Nuten, zueinander versetzt angeordnet. Durch diese Versetzung werden die ineinander verblockten Wände an voneinander weit beabstandeten Stellen auch durch den Eingriff der Nasen fixiert.

Zweckmäßig ist das Fassungsvermögen jedes Tankteils von vorneherein so klein gewählt, dass der Tankteil auf einer Standardpalette lagerbar und/oder transportierbar ist. Dies vereinfacht die logistischen Anforderungen auf den Weg von der Produktionsform bis zum Endverbraucher. Selbst beim Transport können benachbarte Tankteile ineinander verblockt werden, um die Transportabmessungen zu reduzieren und die Tankteile aneinander zu stabilisieren.

Jeder Tankteil kann annähernd quaderförmig sein, wobei er zumindest zwei voneinander abgewandte, die verblockbare Wandbereichs-Struktur aufweisende Wände besitzt, die eine im Wesentlichen ebene Hüllfläche, zumindest in einem hauptsächlichen Erstreckungsbereich der Wand, aufweisen. Diese Quaderform ermöglicht eine sehr dichte und platzsparende Lagerung, auch beim Transport, mehrerer Tankteile. So können beispielsweise durch das Verblocken mehr Tankteile in einen Container geladen werden, als bei nur bündig oder mit engen Zwischenräumen aneinandergestellten Tankteilen. Zweckmäßig sind die Dimensionen zwischen den Wänden mit den verblockbaren Wandbereichs-Strukturen sogar so gewählt, dass eine bestimmte Anzahl solcher verblockter Tankteile nur im verblockten Zustand genau in einen Container passt. Die Quaderform bietet schließlich den Vorteil, das Fassungsvermögen des Tankteils mit optimal kleinen Dimensionen (Breite, Tiefe und Höhe) zu erzielen, und im verblockten Zustand großflächig kraftübertragende Bereiche zu schaffen.

Bei einer weiteren, zweckmäßigen Ausführungsform sind zum Stabilisieren von Kommunikationsverbindungen zwischen je zwei Tankteilen die formschlüssig ineinander verblockten Wandbereichs-Strukturen aneinander in zumindest zwei zueinander senkrechten Richtungen und in einer Ebene fixiert, die zumindest in etwa senkrecht zur Richtung der Kommunikationsverbindungen liegt. Durch die Verblockung werden die Kommunikationsverbindungen vor Querkräften oder relativen Versetzungen geschützt, so dass sie nicht besonders stabil ausgebildet zu werden brauchen. Außerdem werden durch die Verblockung die Anschlussstellen exakt aufeinander ausgerichtet positioniert. Somit erfüllen die verblockbaren Wandbereichs-Strukturen mehrere Aufgaben, da sie einerseits die Stabilität der Wand erhöhen, andererseits die Tankteile platzsparend sozusagen ineinandersetzen lassen, und die Kommunikationsverbindungen entlasten.

Im Hinblick auf eine einfache Erstellung der Kommunikationsverbindung ist zweckmäßig im Tankteil außerhalb der Wandbereichs-Strukturen zumindest ein Rohranschlussdom geformt, der zum Einbringen von Verbindungsrohren nutzbar sind. Vorzugsweise ist je ein Anschlussdom in einem Eckbereich der Wand angeordnet, dem diametral ein weiterer Anschlussdom gegenüberliegt.

Bei einer zweckmäßigen Ausführungsform weisen die annähernd quaderförmigen Tankteile zum stehenden oder liegenden Einbau jeweils eine Längendimension in Richtung einer X-Achse auf, die größer ist als eine Breitendimension in Richtung von zur X-Achse orthogonalen Y- und Z-Achsen. Die Breitendimensionen sind beispielsweise auf den Transport auf einer Standardpalette abgestimmt, wobei die Höhendimension entsprechend größer ist, um das gewünschte Fassungsvermögen des Tankteils zu erzielen.

Bei einer zweckmäßigen Ausführungsform ist sogar die Breitendimension in Richtung der Z-Achse zwischen den die verblockbaren Wandbereichs-Strukturen aufweisenden Wänden kleiner als die Breitendimension zwischen den nicht verblockbaren, verbindenden Wänden. So lässt sich beispielsweise aus zwei Tankteilen ein Tank mit einer allgemein würfelförmigen Gestalt erstellen und lassen sich die verblockten Tankteile schon als platzsparender Würfel transportieren.

Um in jedem Tankteil ausreichende Stabilität zu erzielen, sollten auch angrenzende Begrenzungswände mit Rippen versehen sein. In zumindest einer dieser Begrenzungswände oder in wenigstens einer zwischen den die verblockbaren Wandbereichs-Strukturen aufweisende Wände liegenden Wand ist zweckmäßig ein Tankdom vorgesehen, der, vorzugsweise, in der jeweiligen Einbauachse (für Stehendeinbau oder Liegendeinbau) liegt.

Eine zusätzliche Aussteifung lässt sich dadurch erzielen, dass an den Wänden in einer die Einbauachse enthaltenden Mittelebene des Tankteils zwischen benachbarten Rippen die Nuten durchquerende Versteifungsstege vorgesehen sind.

Jeder Tankteil könnte ein Fassungsvermögen von etwa 2.500 Liter aufweisen, um einfach herstellbar, lagerbar, transportierbar und entladbar zu sein, wobei sich Abmessungen (Längendimension, erste Breitendimension und zweite Breitendimension) von etwa 2,1 m, 1,4 m und 1,3 m als zweckmäßig erwiesen haben.

Um in der Verblockung einen großflächigen Eingriff zu erzielen, ist zweckmäßig die Rippe im Querschnitt trapezförmig, wobei die Nut einen gerundeten Nutgrund aufweisen sollte, damit der Kamm des Trapezes im verblockten Zustand der Tankteile etwas Luft hat.

Die bei der Verblockung einen wichtigen Beitrag leistende Nase sollte in etwa pyramidenstumpfförmig sein, während die Nasenaufnahme zwei in Richtung der Rippen mit der Weite der Nase beabstandete Höcker aufweist.

Der Tank kann dadurch erstellt werden, dass die verblockten Tankteile durch zumindest eine Spanneinrichtung gegeneinandergespannt und/oder bei Erdeinbau durch den Erddruck gegeneinander gepresst werden.

Anhand der Zeichnungen werden Ausführungsformen des Erfindungsgegenstandes erläutert. Es zeigen:
- Fig. 1: eine Perspektivansicht eines aus zwei identischen Tankteilen erstellten Tanks, beispielsweise für Erdeinbau,
- Fig. 2: eine Transporteinheit, bestehend aus einem Tankteil und einer Standardpalet- te, in perspektivischer Darstellung,
- Fig. 3: eine Draufsicht auf den Tank von Fig. 1,
- Fig. 4: eine Seitenansicht des Tanks von Fig. 1,
- Fig. 5: eine Perspektivdarstellung eines Tanks aus drei hier identischen Tankteilen, für Stehendeinbau, und
- Fig. 6: eine Perspektivansicht eines aus zwei identischen Tankteilen erstellten Tanks für Liegendeinbau.

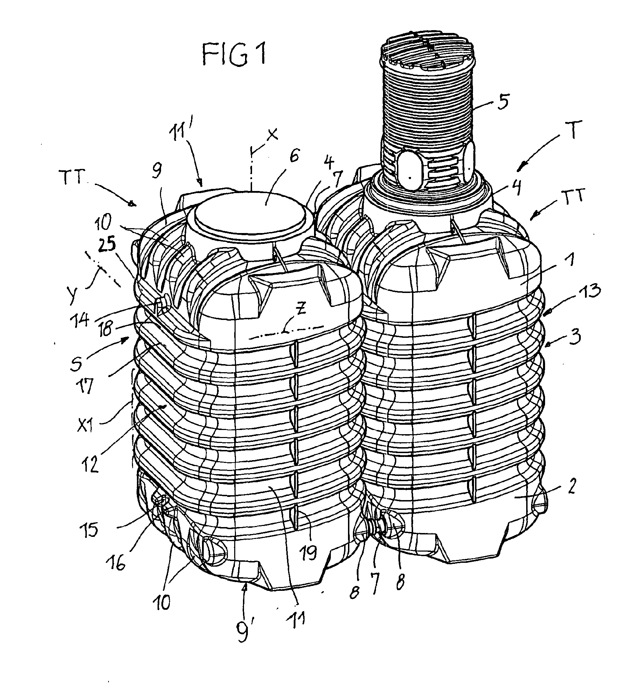

Ein in Fig. 1 gezeigter Tank T (hierfür einen Stehendeinbau) ist aus zwei identischen Tankteilen TT erstellt, wobei die Tankteile TT einander kontaktierend zusammengefügt und ineinander verblockt sind. Jeder Tankteil TT ist beispielsweise ein monolithischer Kunststoffformteil mit annähernd quaderförmiger Gestalt (gerundete Quaderkanten), einer oberen Endkappe 1, einer unteren Endkappe 2 und einem Zwischenbereich 4 (Wände 12, 13, 11, 11'). In der oberen Endkappe 1 ist ein Tankdom 4 geformt (beispielsweise koaxial mit einer vertikalen Einbauachse (X-Achse)), der durch einen eingeformten oder eingesetzten Deckel 6 verschlossen sein kann. In Fig. 1 ist im rechten Tankteil TT der Deckel 6 entnommen und ein Aufsatzteil 5 eingesetzt, der bei Erdeinbau die Höhendifferenz zum Bodenniveau überbrückt. Die beiden Tankteile TT sind durch Rohrverbindungen 7 miteinander kommunizierend verbunden, wobei die Rohrverbindungen 7 in Anschlussdome 8 eingesetzt sind, die diagonal gegenüberliegend in den Wänden 12, 13 geformt sind. Die untere Endkappe 2 hat eine Begrenzungswand 9', die mit Rippen 10 ausgesteift ist, wie auch eine in der oberen Endkappe 1 vorgesehene Begrenzungswand 9 mit Versteifungsrippen 10. Die Wände 12 und 13 jedes Tankteils TT sind mit ineinander formschlüssig verblockbaren Wandbereichs-Strukturen S geformt. Diese umfassen beispielsweise in etwa in Richtung einer zur X-Achse orthogonalen Y-Achse verlaufende Rippen 17 und dazwischenliegende Nuten 18, die zur Aufnahme der Rippen 17 ausgebildet sind. Ferner ist in jeder Wand 12, 13 eine Nase 14 und eine Nasenaufnahme 15 zwischen zwei in Richtung der Y-Achse mit der Weite der Nase 14 beabstandeten Höckem 16 vorgesehen. Die Nase 14 ist beispielsweise auf der oberen Flanke einer in der Richtung der Y-Achse verlaufenden Rippe 25 geformt. Die Rippen 17 und Nuten 18 können (nicht gezeigt) exakt parallel zur Y-Achse sein.

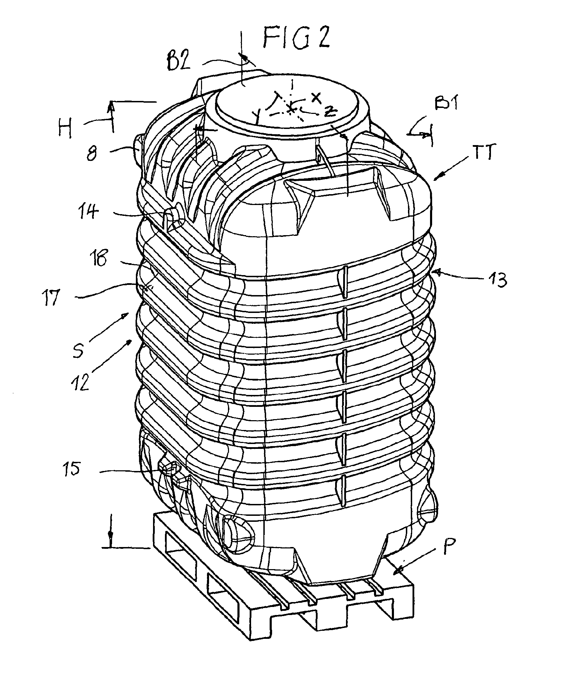

Bei der in den Fig. 1 und 2 gezeigten Ausführungsform ist jedoch die formschlüssig verblockbare Wandbereichs-Struktur S durch nur eine Rippe 17 geformt, die in den Wänden 12, 13, 11, 11' um die X-Achse gewindegangartig umläuft, wie auch nur eine Nut 18 mit einem entsprechend gewindegangartigen Verlauf, derart, dass die Rippe 17 an der Wand 12 auf Lücke zu der Rippe 17 in der gegenüberliegenden Wand 13 liegt. Die zwischen den Wänden 12, 13 liegenden Wände 11, 11' enthalten ebenfalls die Rippe 17 und die Nut 18 mit dem gewindegangartigen Verlauf, wobei zusätzliche Versteifungsstege 19 in der Nut bzw. den in diesen Wänden 11, 11' verlaufenden Nutabschnitten eingeformt sind.

Die beiden Tankteile TT sind mit den beiden aneinander anliegenden Wänden 12, 13 formschlüssig dadurch miteinander verblockt, dass die Rippe 17 mehrfach in die Nut 18 und die Nase 14 in die Nasenaufnahme 15 eingreifen, so dass die Verblockung in Richtung der Y-Achse und der X-Achse eine Fixierung beider Tankteile TT in einer Ebene erbringt, die in etwa senkrecht zu den Verbindungsrohren 7 liegt. Dank der annähernden Quaderform jedes Tankteils TT hat jede wand 12, 13 zumindest über einen Hauptbereich ihrer Erstreckung eine Hüllebene X1, die im Wesentlichen eben ist.

In Fig. 2 ist beispielsweise der in Fig. 1 links gezeigte Tankteil TT als Transportgebinde zur Lagerung, zum Transport und zum Abladen vorbereitet. Der Tankteil TT steht auf einer Standardpalette P und ist beispielsweise durch eine Schrumpffolie oder dgl. fixiert. Die gezeigte Ausführungsform des Tankteils TT hat eine Längendimension in Richtung der X-Achse (Einbauachse für diesen Fall), die erheblich größer ist als eine erste Breitendimension B1 in Richtung der Z-Achse und eine zweiten Breitendimension B2 in Richtung der Y-Achse (H, B1, B2). Die Höhendimension H ist bedeutend größer als die Breitendimensionen B1, B2. Die erste Breitendimension B1 ist beispielsweise kleiner als die zweite Breitendimension B2. Wenn zwei solche Tankteile TT miteinander verblockt sind, ergibt sich so annähernd ein würfelförmiger Tank T. Zweckmäßig sind Abmessungen H, B1, B2 von etwa 2,1 m, 1,4 m und 1,3 m, passend zum Transport auf einer Standardpalette P mit Abmessungen von etwa 0,8 x 1,2 m.

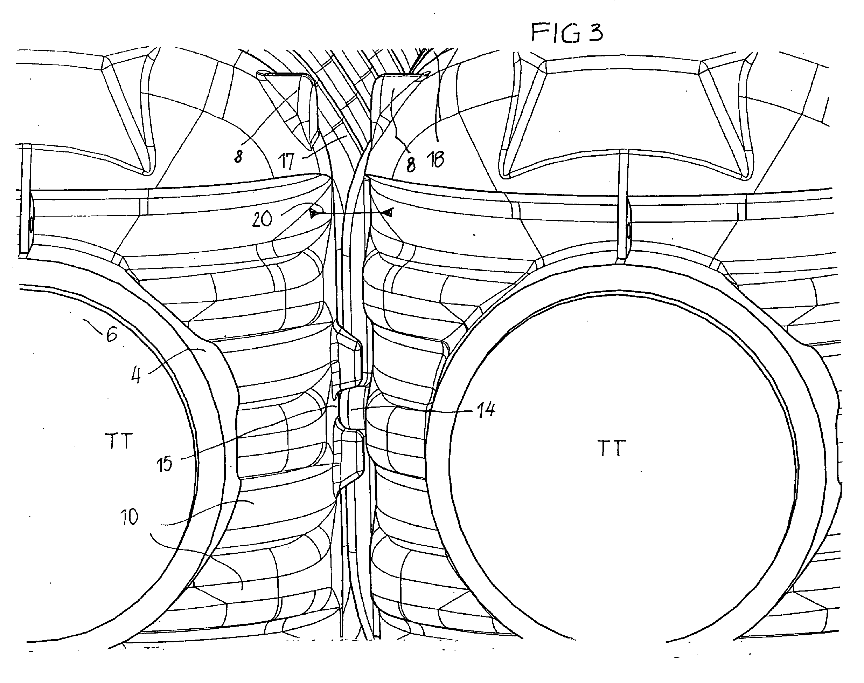

In der Draufsicht in Fig. 3 ist erkennbar, dass beide Tankdome 4 zunächst noch mit ihren Deckeln 6 verschlossen sind, und dass die Tankteile TT beispielsweise durch eine nur schematisch angedeutete Spanneinrichtung 20 gegeneinander gezogen und ineinander verblockt sind, wobei auch die jeweilige Nase 14 in die Nasenaufnahme 15 eingreift (z.B. eine oben und eine unten). Die Rohranschlussdome 8 sind noch nicht ausgeschnitten, sind jedoch durch die formschlüssige Verblockung aufeinander ausgerichtet positioniert. Zum Einsetzen eines Aufsatzstückes 5 wird der entsprechende Deckel 6 ausgeschnitten.

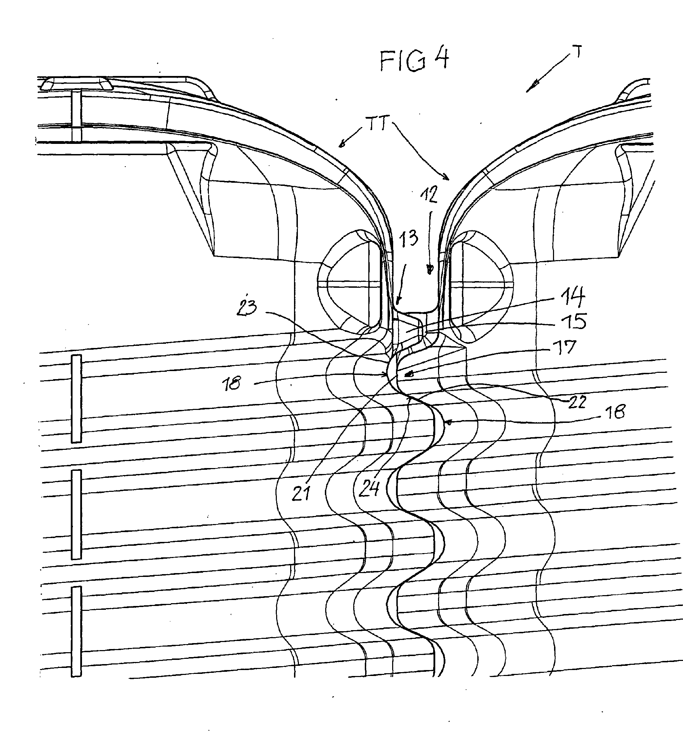

In der Seitenansicht in Fig. 4 ist deutlich zu erkennen, wie die Rippe 17 in die Nut 18 eingreift. Die Rippe 17 hat einen trapezförmigen Querschnitt mit z.B. geraden Flanken 24 und einem im Wesentlichen ebenen Kamm 21, während die Nut 18 ebenfalls gerade Flanken und einen gerundeten Nutgrund 23 besitzt, so dass hier trotz des kontaktierenden Eingriffs etwas Luft ist. Die Nase 14 ist in die Nasenaufnahme 15 eingetreten. Die Ober- und Unterseiten beider Tankteile TT liegen somit auf demselben Höhenniveau, da dank der angedeuteten Gewindesteigung die Rippe 17 in der Wand 12 auf Lücke liegt zu der Rippe 17 in der anderen Wand 13.

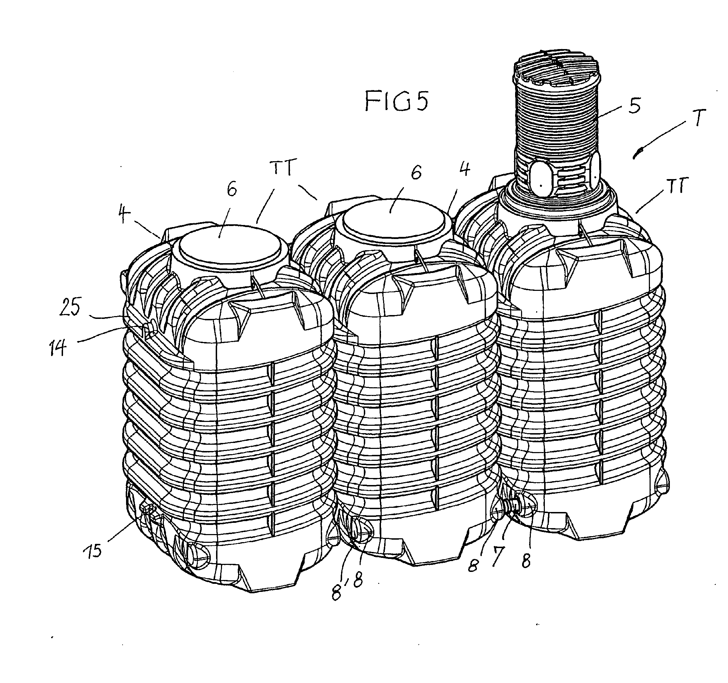

In Fig. 5 ist der Tank T aus drei hier identischen Tankteilen TT erstellt, die jeweils paarweise formschlüssig ineinander verblockt sind. Die jeweilige Nase 14 ist beispielsweise auf der oberen Flanke der Rippe 25 einer Wand 12, 13 platziert, die exakt in Richtung der Y-Achse verläuft. In zweien der Dome 4 sind die Deckel 6 enthalten, während im dritten Dom der Aufsatzteil 5 installiert ist. Jeder Tankteil TT hat beispielsweise ein Fassungsvermögen von etwa 2.500 Liter. Das System kann modular beliebig erweitert werden, derart, dass jeweils zwei Tankteile TT paarweise miteinander verblockt sind.

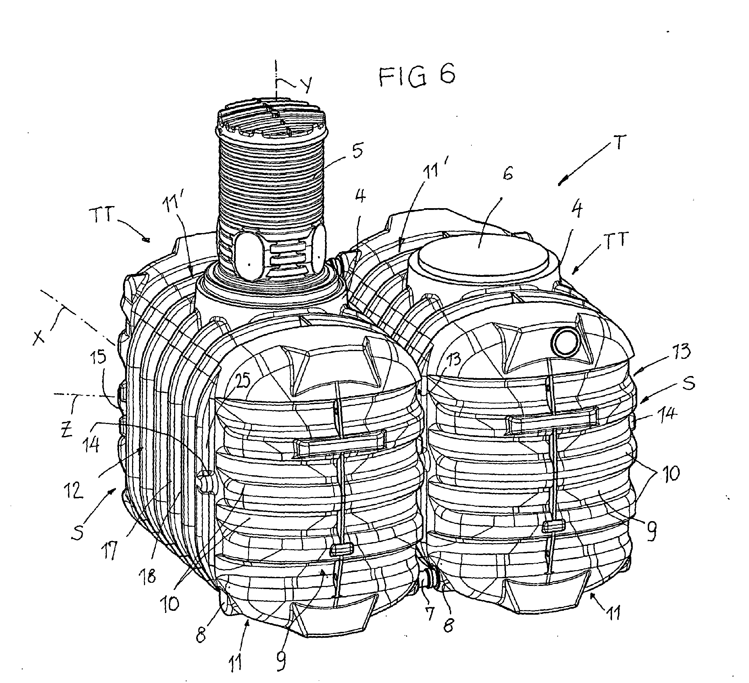

Der in Fig. 6 gezeigte Tank T ist ebenfalls aus zwei identischen Tankteilen TT erstellt, die formschlüssig mit ihren Wänden 12, 13 ineinander verblockt sind, und auch mit der Nase 14 in der jeweiligen Nasenaufnahme 15. Im Unterschied zur Ausführungsform der Fig. 1 bis 5 sind hier die Tankteile TT zum Liegendeinbau gestaltet, wobei die Y-Achse die Einbauachse ist und die Rippe 17 und die Nut 18 jeweils gewindegangartig um die X-Achse umlaufen. Ferner sind die Dome 4 in den Wänden 11' eingeformt, und ist in einem Dom 4 ein Aufsatzteil 5 installiert. Die Tankteile TT in Fig. 6 können beispielsweise im gleichen Produktionswerkzeug hergestellt werden, wie die Tankteile TT in den Fig. 1 bis 5, allerdings unter Verwendung von Wechseleinsätzen, um den Liegendeinbau zu ermöglichen. Jeder Tankteil TT ist in Richtung der X-Achse länger als in Richtung der Z-Achse und in Richtung der Y-Achse, wobei die Breitendimension in Richtung der Z-Achse kleiner ist als die Breitendimension in Richtung der Y-Achse, so dass die beiden ineinander verblockten Tankteile TT wiederum einen annähernd würfelförmigen Tank T ergeben. Die beiden Tankteile TT kommunizieren über die diagonal zueinander angeordneten Rohre 7 in den Rohranschlussdomen 8. Weitere Details entsprechen den anhand Fig. 1 bis 5 erläuterten Details.

## Patentansprüche

1. Tank (T), aus mindestens zwei kommunizierenden, gemeinsam ein Sollfassungsvermögen definierenden Kunststoff-Tankteilen (TT), die identisch mit je einem Fassungsvermögen entsprechend einem zumindest herstellungs- und transporttechnisch optimierten Teil des Sollfassungsvermögens mit zumindest formschlüssig paarweise ineinander verblockbaren Wandbereichs-Strukturen (S) einzeln hergestellt, transportiert und am Einsatzort mit den Wandbereichs-Strukturen (S) formschlüssig miteinander verblockt sind, wobei die ineinander verblockbaren Wandbereichs-Strukturen (S) abwechselnd zueinander parallele Rippen (17) und Nuten (18) zum formschlüssigen Aufnehmen der Rippen umfassen, **dadurch gekennzeichnet, dass** die ineinander verblockbaren Wandbereichs-Strukturen (S), zusätzlich, wenigstens eine Nase (14) und eine Nasenaufnahme (15) umfassen, wobei die Nasenaufnahme (15) die eingreifende Nase (14), einer verblockten zweiten Wandbereichs-Struktur (S), zumindest in Verlaufsrichtung der Rippen und Nuten blockiert.

2. Tank nach Anspruch 1, **dadurch gekennzeichnet, dass** die Rippen und Nuten der Wandbereichs-Strukturen (S) durch eine um eine am Einbauort horizontale oder vertikale Einbauachse (Y- oder X-Achse) gewindeartig umlaufende Rippe (17) und eine im Querschnitt an die Rippe (17) angepasste gewindegangartige Nut (18) gebildet sind.

3. Tank nach Anspruch 2, **dadurch gekennzeichnet, dass** die Gewindesteigung der Rippe (17) derart gewählt ist, dass eine Rippe in einer Wand (12, 13) zur Rippe in der gegenüberliegenden Wand (13, 12) auf Lücke verläuft.

4. Tank nach Anspruch 1, **dadurch gekennzeichnet, dass** in jeder Wand (12, 13) die Nase (14) und die Nasenaufnahme (15), vorzugsweise, separiert von den Rippen und Nuten zueinander versetzt vorgesehen sind.

5. Tank nach Anspruch 1, **dadurch gekennzeichnet, dass** jeder Tankteil (TT) in einer auf einer Standardpalette (P) lager- und/oder transportierbaren Größe hergestellt ist.

6. Tank nach Anspruch 1, **dadurch gekennzeichnet, dass** zum Stabilisieren von Kommunikationsverbindungen (7, 8) zwischen je zwei Tankteilen (TT) die formschlüssig ineinander verblockten Wandbereichs-Strukturen (S) aneinander in zumindest zwei zueinander senkrechten Richtungen (X-, Y-Achsen) in einer Ebene fixiert sind, die zumindest in etwa senkrecht zur Richtung der Kommunikationsverbindungen (7, 8) liegt.

7. Tank nach Anspruch 1, **dadurch gekennzeichnet, dass** im Tankteil (TT) außerhalb der Wandbereichs-Strukturen (S) Rohranschlussdome (8) geformt sind, vorzugsweise je ein Anschlussdom (8) zumindest in zwei einander gegenüberliegenden Eckbereichen der Wand (12, 13).

8. Tank nach Anspruch 1, **dadurch gekennzeichnet, dass** die annähernd quaderförmigen Tankteile (TT) zum stehenden oder liegenden Einbau jeweils eine Längendimension (H) in Richtung einer X-Achse aufweisen, die größer ist als eine Breitendimension (B1, B2) in Richtung von zur X-Achse orthogonalen Y- und Z-Achsen.

9. Tank nach Anspruch 8, **dadurch gekennzeichnet, dass** die Breitendimension (B1) in Richtung der Z-Achse zwischen den die verblockbaren Wandbereichs-Strukturen (S) aufweisenden Wänden (12, 13) kleiner ist als die Breitendimension (B2) zwischen den nicht verblockbaren Wänden (9, 9').

10. Tank nach Anspruch 1, **dadurch gekennzeichnet, dass** jeder Tankteil (TT) annähernd quaderförmig ist und zumindest zwei voneinander abgewandte, die verblockbare Wandbereichs-Struktur (S) aufweisende Wände (12, 13) mit einer im Wesentlichen ebenen Hüllfläche (X1) aufweist, und dass auch die an die die verblockbaren Wandbereichs-Strukturen (S) aufweisenden Wände (12, 13) angrenzenden Begrenzungswände (9, 9') des Tankteils (TT) mit Rippen (10) versehen sind, und dass zumindest eine dieser Begrenzungswände (9, 9') und/oder wenigstens eine der zwischen den die verblockbaren Wandbereichs-Strukturen (S) aufweisenden Wände (12, 13) liegende Wand (11, 11') einen, vorzugsweise in der Einbauachse (Y-, X-Achse) liegenden, Tankdom (4) aufweist.

11. Tank nach Anspruch 10, **dadurch gekennzeichnet, dass** an den Wänden (11, 11') in einer die Einbauachse (Y-, X-Achse) enthaltenden Mittelebene des Tankteils (TT) zwischen benachbarten Rippen (17) die Nuten (18) durchquerende Versteifungsstege (19) vorgesehen sind.

12. Tank nach wenigstens einem der vorhergehenden Ansprüche, **dadurch gekennzeichnet, dass** der Tankteil (TT) ein Fassungsvermögen von etwa 1.000 I bis 3.000 I hat, bei einer Längendimension (H) von etwa 2,0 bis 2,5 m, einer ersten Breitendimension (B1) von etwa 0,6 bis 1,2 m und einer zweiten Breitendimension (B2) von etwa 0,6 bis 1,2 m.

13. Tank nach Anspruch 2, **dadurch gekennzeichnet, dass** die Rippe (17) im Querschnitt einen trapezförmigen Umriss und die Nut (18) einen gerundeten Nutgrund (23) aufweist.

14. Tank nach Anspruch 1, **dadurch gekennzeichnet, dass** die Nase (14) in etwa pyramidenstumpfförmig ist, und dass die Nasenaufnahme (15) zwei in Richtung der Y-Achse mit der Weite der Nase (14) beabstandete Höcker (16) aufweist.

15. Tank nach Anspruch 1, **dadurch gekennzeichnet, dass** die Tankteile (TT) durch zumindest eine Spanneinrichtung (20) mit den verblockbaren Wandbereichs-Strukturen (S) gegeneinander gespannt und/oder bei Erdeinbau des Tanks (T) durch den Erddruck gegeneinander gepresst sind.

## Claims

1. Tank (T), comprising at least two communicating plastic material tank parts (TT) commonly defining a target capacity of the tank, which tank parts (TT) are produced one by one and identically each with a capacity corresponding to a part of a target capacity of the tank (T), which capacity of each tank part (TT) is optimised with a view to manufacturing and transporting, the wall region structures (S) can be interlocked pairwise within each other at least with a form-fit, the tank parts (TT) being transported to and interlocked at the installation site with a form-fit between the wall region structures (S), the interlockable wall region structures (S) comprising alternating parallel ribs (17) and grooves (18) for accommodating the ribs (17) with a form-fit, **characterised in that** the mutually interlockable wall region structures (S) additionally comprise at least one nose (14) and one nose socket (15), with the nose socket (15) of a first wall region structure (S) locking the engaging nose (14) of a second wall region structure (S) at least in the direction of the extension of the ribs and grooves (17, 18).

2. Tank according to claim 1, **characterised in that** the ribs and grooves of the wall region structures (S) are formed by a rib (17) and a groove (18) fitting by its cross-section to the rib (17), the rib (17) extending thread-like around an installation axis (Y or X-axis) of the tank (T) which axis is either placed horizontally or vertically at the installation site of the tank.

3. Tank according to claim 2, **characterised in that** the gradient of the thread-like rib (17) is selected such that the rib in one wall (12 or 13) points to the intermediate space between rib portions of the rib (17) in the opposite wall (13 or 12).

4. Tank according to claim 1, **characterised in that** the nose (14) and the nose socket (15) in each wall (12, 13) are arranged, preferably, separated from the ribs and grooves (17, 18) and offset with respect to each other.

5. Tank according to claim 1, **characterised in that** each part (T) is manufactured with a dimensioning facilitating to store and/or transport the tank part (TT) on a standard pallet (P).

6. Tank according to claim 1, **characterised in that** for the stabilisation of communication tube connections (7, 8) provided between respective two tank parts (TT) the wall region structures (S) when being interlocked within each other with a form-fit are fixed to each other within a plane and in at least two directions (X, Y, axes) which plane is situated at least substantially perpendicular to the direction of the communication tube connections (7, 8).

7. Tank according to claim 1, **characterised in that** tube terminal domes (8) are formed in the tank part (TT) outside of the wall region structures (S), preferably a respective single terminal dome (8) at least in each of two corner regions of the wall (12, 13) which corner regions lie diametrically opposite to each other.

8. Tank according to claim 1, **characterised in that** the substantially parallelepiped tank parts (TT) comprise a length dimension (H) in the direction of a X-axis for installation in standing or lying position which length dimension (H) is larger than a width dimension (B1, B2) in the direction of two axes (Y, Z) orthogonal to the X-axis.

9. Tank according to claim 8, **characterised in that** the width dimension (B1) in the direction of the Z-axis and between the walls (12, 13) comprising the wall region structures (S) for the interlocking engagement of the tank parts (TT) is smaller than the width dimension (B2) between the walls (9, 9') which cannot be interlocked within each other.

10. Tank according to claim 1, **characterised in that** each tank part (TT) is substantially parallelepiped and has two remotely positioned walls (12, 13) each including a wall region structure (S) with a substantially planar wrapping plane (X1) and that also each bounding wall (9, 9') of the tank part (TT) adjacent to one of the walls (12, 13) with the wall region structures (S) are provided with ribs (10), and that at least one of the bounding walls (9, 9') and/or at least one wall (11, 11') situated between the walls (12, 13) with the wall region structures (S) is provided with a tank dome (4), preferably a tank dome (4) being situated in the respective installation axis (Y, X) of the tank (T).

11. Tank according to claim 10, **characterised in that** stiffening webs (19) are provided at the walls (11, 11'), the stiffening webs (19) crossing the grooves (18) between adjacent ribs (17) in a central plane of the tank part (TT) which central plane contains the installation axis (Y, X) of the tank (T).

12. Tank according to at least one of the preceding claims, **characterised in that** each tank part (TT) has a capacity of about 1,000 to 3,000 litres, and a length dimension (H) of about 2.0 to 2.5 metres, a first width dimension (B1) of about 0.6 to 1.2 metres, and a second width dimension (B2) of about 0.6 to 1.2 metres.

13. Tank according to claim 2, **characterised in that** in respective cross-sections the rib (17) has a trapezoidal contour, and that the groove (18) has a rounded groove bottom (23).

14. Tank according to claim 1, **characterised in that** the nose (14) has a shape of a frusto-pyramid, and that the nose socket (15) comprises two tapered humps (16) spaced apart in the direction of the Y-axis with the width of the nose (14).

15. Tank according to claim 1, **characterised in that** the tank parts (TT) are spanned against each other with their interlocked wall region structures (S) by at least one spanning assembly (20) and/or are pressed against each other by the soil pressure when the tank (T) is installed in the ground.

## Revendications

1. Réservoir (T) composé d'au moins deux parties de réservoir en matière plastique (TT) qui communiquent, qui définissent ensemble une contenance théorique, qui sont fabriquées individuellement de manière identique, avec chacune une contenance correspondant à une partie, optimisée au moins en matière de fabrication et de transport, de ladite contenance théorique, avec des structures de zone de paroi (S) aptes à être bloquées l'une dans l'autre par paires au moins par complémentarité de forme, et qui sont transportées individuellement et bloquées mutuellement, sur le lieu d'utilisation, par complémentarité de forme grâce aux structures de zone de paroi (S), les structures de zone de paroi aptes à être bloquées (S) comprenant en alternance des nervures parallèles (17) et des rainures (18) destinées à recevoir les nervures par complémentarité de forme,
**caractérisé en ce que** les structures de zone de paroi (S) aptes à être bloquées les unes dans les autres comprennent en supplément au moins une saillie (14) et un logement pour saillie (15), le logement pour saillie (15) bloquant au moins dans le sens d'extension des nervures et des rainures la saillie (14) entrante d'une deuxième structure de zone de paroi (S) bloquée.

2. Réservoir selon la revendication 1, **caractérisé en ce que** les nervures et les rainures des structures de zone de paroi (S) sont formées par une nervure (17) qui s'étend à la manière d'un filetage (17) autour d'un axe de montage horizontal ou vertical sur le lieu de montage (axe Y ou X), et par une rainure du type filet hélicoïdal (18) qui est adaptée en section transversale à la nervure (17).

3. Réservoir selon la revendication 2, **caractérisé en ce que** le pas de filet de la nervure (17) est choisi de telle sorte qu'une nervure d'une paroi (12, 13) soit disposée en quinconce par rapport à la rainure de la paroi opposée (13, 12).

4. Réservoir selon la revendication 1, **caractérisé en ce que** dans chaque paroi (12, 13), la saillie (14) et le logement pour saillie (15), de préférence séparés des nervures et des rainures, sont décalés.

5. Réservoir selon la revendication 1, **caractérisé en ce que** chaque partie de réservoir (TT) est fabriquée dans une taille apte à être stockée et/ou transportée sur une palette standard (P).

6. Réservoir selon la revendication 1, **caractérisé en ce que** pour stabiliser des liaisons de communication (7, 8) entre deux parties de réservoir (TT) les structures de zone de paroi (S) bloquées l'une dans l'autre par complémentarité de forme sont fixées l'une à l'autre dans au moins deux directions perpendiculaires (axes X, Y) dans un plan qui est au moins approximativement perpendiculaire à la direction des liaisons de communication (7, 8).

7. Réservoir selon la revendication 1, **caractérisé en ce que** des calottes de raccordement de tuyau (8) sont formées dans la partie de réservoir (TT), en dehors des structures de zone de paroi (S), de préférence une calotte de raccordement de tuyau dans au moins deux zones d'angle opposées de la paroi (12, 13).

8. Réservoir selon la revendication 1, **caractérisé en ce que** les parties de réservoir (TT), approximativement parallélépipédiques, présentent chacune, pour un montage vertical ou horizontal, une dimension en longueur (H) dans le sens d'un axe X qui est supérieure à une dimension en largeur (B1, B2) dans le sens d'axes Y et Z orthogonaux par rapport à l'axe X.

9. Réservoir selon la revendication 8, **caractérisé en ce que** la dimension en largeur (B1) dans le sens de l'axe Z entre les parois (12, 13) présentant les structures de zone de paroi (S) aptes à être bloquées est inférieure à la dimension en largeur (B2) entre les parois non aptes à être bloquées (9, 9').

10. Réservoir selon la revendication 1, **caractérisé en ce que** chaque partie de réservoir (TT) est approximativement parallélépipédique et présente au moins deux parois (12, 13) opposées, présentant la structure de zone de paroi apte à être bloquée (S) et pourvues d'une surface enveloppante (X1) globalement plane, et **en ce que** les parois de délimitation (9, 9') de la partie de réservoir (TT) qui sont voisines des parois (12, 13) présentant les structures de zone de paroi aptes à être bloquées (S) sont pourvues elles aussi de nervures (10), et **en ce que** l'une au moins de ces parois de délimitation (9, 9') et/ou au moins une paroi (11, 11') située entre les parois (12, 13) présentant les structures de zone de paroi aptes à être bloquées (S) présentent une calotte de réservoir (4) située de préférence dans l'axe de montage (axe Y, axe X).

11. Réservoir selon la revendication 10, **caractérisé en ce qu'**il est prévu sur les parois (11, 11'), dans un plan médian de la partie de réservoir (TT) contenant l'axe de montage (axe Y, axe X), entre des nervures (17) voisines, des bandes de renforcement (19) qui traversent les rainures (18).

12. Réservoir selon l'une au moins des revendications précédentes, **caractérisé en ce que** la partie de réservoir (TT) a une contenance d'environ 1.000 1 à 3.000 1, pour une dimension en longueur (H) d'environ 2,0 à 2,5 m, une première dimension en largeur (B1) d'environ 0,6 à 1,2 m et une seconde dimension en largeur (B2) d'environ 0,6 à 1,2 m.

13. Réservoir selon la revendication 2, **caractérisé en ce que** la nervure (17) présente en section transversale un contour trapézoïdal, et la rainure (18) présente un fond (23) arrondi.

14. Réservoir selon la revendication 1, **caractérisé en ce que** la saillie (14) a à peu près la forme d'une pyramide tronquée et **en ce que** le logement pour saillie (15) présente deux bosses (16) espacées dans le sens de l'axe Y suivant la largeur de la saillie (14).

15. Réservoir selon la revendication 1, **caractérisé en ce que** les parties de réservoir (TT) sont reliées par serrage à l'aide d'au moins un dispositif de serrage, avec les structures de zone de paroi aptes à être bloquées (S) et/ou, si le réservoir (T) est enterré, sont pressées l'une contre l'autre par la pression de la terre.
